# EUROPÄISCHE PATENTANMELDUNG

(11) **EP 2 384 882 A1**
(43) Veröffentlichungstag der Anmeldung: **09.11.2011**
(21) Anmeldenummer: 11164573.5
(22) Anmeldetag: 03.05.2011
(51) Int. Cl.: B29C 67/00, B22F 3/105

(54) **Verfahren zum generativen Herstellen eines dreidimensionalen Objekts mit Räumelementen und Verfahren zum Erstellen eines entsprechenden Datensatzes**

(30) Priorität: 05.05.2010 DE 102010019447
(71) Anmelder: EOS GmbH Electro Optical Systems, 82152 Krailling (DE)
(72) Erfinder: THOMA, Axel, 82205, Gilching (DE)
(74) Vertreter: Prüfer & Partner GbR European Patent Attorneys

(57) **Zusammenfassung**

Verfahren zum generativen Herstellen eines dreidimensionalen Objekts (3) mittels einer Vorrichtung, mit den folgenden Schritten: a) Schichtweises Auftragen eines Pulvermaterials (11) auf einem Träger (5) der Vorrichtung oder einer zuvor aufgetragenen Schicht; b) selektives Verfestigen des Pulvermaterials (11) durch energiehaltige Strahlung (8') an jenen Stellen, die dem Querschnitt des Objekts (3) in der Schicht entsprechen, c) Wiederholen der Schritte a) und b), bis das Objekt (3) fertig gestellt ist. Das Objekt (3) hat zumindest einen Hohlraum (13), der in einer Öffnung (14) an der Oberfläche des Objekts (3) mündet, und das Pulvermaterial (11) wird so verfestigt, dass ein Räumelement (12) gebildet wird, das sich in dem Hohlraum (13) erstreckt und durch die Öffnung (14) aus dem Hohlraum herausziehbar ist. Ein dazugehöriges Verfahren zum Erstellen eines Datensatzes des dreidimensionalen Objekts (3) ist weiter offenbart.

## Beschreibung

Die vorliegende Erfindung bezieht sich auf ein Verfahren zum generativen Herstellen eines dreidimensionalen Objekts und auf ein Verfahren zum Erstellen eines entsprechenden Datensatzes.

DE 199 37 260 B4 beschreibt ein bekanntes Verfahren und eine Vorrichtung zum generativen Herstellen eines dreidimensionalen Objekts, mit den folgenden Schritten: a) Schichtweises Auftragen eines Pulvermaterials auf einem Träger der Vorrichtung oder einer zuvor aufgetragenen Schicht; b) selektives Verfestigen des Pulvermaterials durch energiehaltige Strahlung an jenen Stellen, die dem Querschnitt des Objekts in einer Schicht entsprechen, c) Wiederholen der Schritte a) und b), bis das Objekt fertig gestellt ist.

DE 295 06 716 U1 beschreibt ein bekanntes Verfahren zur Nachbearbeitung eines generativ hergestellten dreidimensionalen Objekts, wobei das Objekt mit einer Druckluftpistole abgeblasen wird, um Restpulver zu beseitigen.

Es ist die Aufgabe der vorliegenden Erfindung, ein Verfahren zum generativen Herstellen eines dreidimensionalen Objekts vorzusehen, mit dem das Entfernen von Restpulver, das sich im Inneren des dreidimensionalen Objekts befindet, vereinfacht werden kann. Diese Aufgabe wird durch das Verfahren mit den Merkmalen des Anspruchs 1 und durch das Verfahren zum Erstellen eines Datensatzes mit den Merkmalen des Anspruchs 9 gelöst. Vorteilhafte Weiterbildungen sind Gegenstand der Unteransprüche.

Die Erfindung hat den Vorteil, dass die dreidimensionalen Objekte ohne wesentlichen Aufwand vom innen liegenden Restpulver befreit werden können. Das Räumelement zum Beispiel in Gestalt eines Fadens ermöglicht es, das Restpulver in mehr oder weniger stark verwinkelten Hohlräumen oder Kanälen des Objekts zumindest so freizuräumen, dass ein Pilotkanal entsteht. Dieser Pilotkanal lässt bei Anlegen einer Luftströmung mit oder ohne Strahlgut eine Mindestströmung zu, so dass nach und nach der volle Querschnitt des Hohlraums bzw. Kanals freigelegt wird.

Das Räumelement ist Bestandteil der Daten, die bei der Herstellung des Objekts verwendet werden. Das Räumelement wird so platziert, dass es die Wände des Hohlraums nicht berührt. Bei Hohlräumen, die die Gestalt eines Kanals mit gleichförmig verlaufender Wandung haben, kann das Räumelement genau oder zumindest annähernd entlang der neutralen Faser des Kanals verlaufen. Für jeden in dem Objekt vorhandenen Hohlraum kann ein separates Räumelement platziert werden, wobei es auch zweiteilig in einem Hohlraum liegen kann, d.h. das Räumelement kann an einer Verzweigungsstelle geteilt sein, die einen für die Räumung günstigen Scheitelpunkt darstellt, und es kann je zu einer der beiden Öffnungen des Hohlraums herausgezogen werden.

Das Räumelement kann die Gestalt eines Fadens haben, es ist aber nicht darauf beschränkt. Jede Art von geometrischer Form kann verwendet werden, die Bestandteil des Datensatzes für das Objekt ist und einen Pilotkanal freilegen kann. Das Räumelement kann die Gestalt eines Bands für flache Kanalquerschnitte, eine wellen- oder spiralförmige Geometrie oder eine Kombination davon haben. Dadurch ist es möglich, sogar stark verwinkelte Hohlräume bzw. Kanäle oder Kanalbögen vom Restpulver zu befreien.

Weitere Merkmale und Zweckmäßigkeiten der Erfindung ergeben sich aus der Beschreibung von Ausführungsbeispielen anhand der beigefügten Zeichnungen. Von den Figuren zeigen:
- Fig. 1: eine schematische Ansicht einer Vorrichtung zum Herstellen eines dreidimensionalen Objekts; und
- Fig. 2: eine Schnittansicht eines dreidimensionalen Objekts, das in der Vorrichtung gemäß der Fig. 1 hergestellt wird.

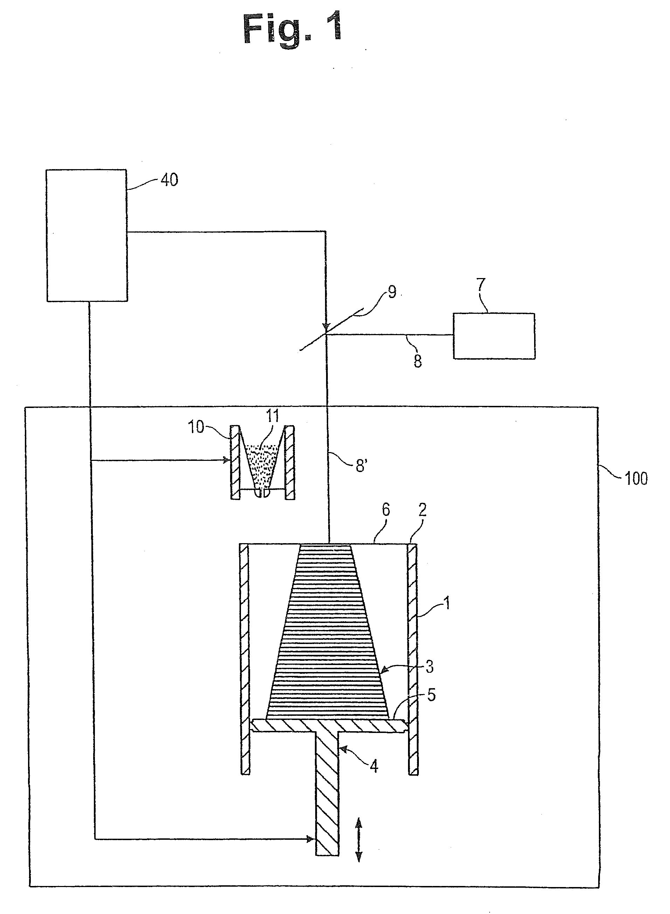

Die Fig. 1 zeigt eine schematische Ansicht einer Vorrichtung zum Herstellen eines dreidimensionalen Objekts 3, die exemplarisch als Lasersintervorrichtung ausgebildet ist.

Die Lasersintervorrichtung weist einen nach oben hin offenen Rahmen 1 mit einem darin befindlichen, in vertikaler Richtung bewegbaren Träger 5 auf, der das herzustellende dreidimensionale Objekt 3 trägt. Der Rahmen 1 umschließt mit seinem oberen Abschnitt 2 ein Baufeld 6. Vorzugsweise bilden der Rahmen 1 und der Träger 5 einen austauschbaren Wechselrahmen, der der Lasersintervorrichtung entnommen werden kann. Der Träger 5 ist mit einer Hubmechanik 4 in Verbindung, die ihn zumindest unterhalb der Ebene des Baufelds 6 in vertikaler Richtung so verfährt, dass die Oberseite einer jeweils zu verfestigenden Pulverschicht in der Ebene des Baufelds 6 liegt.

Des Weiteren ist ein Beschichter 10 zum Aufbringen einer Schicht eines Pulvermaterials 11 vorgesehen. Als Pulvermaterial 11 können alle lasersinterbaren Pulver verwendet werden, wie zum Beispiel Pulver aus Kunststoff, Metallen, Keramiken, Formsand und Verbundmaterialien. Als metallhaltiges Pulvermaterial kommen beliebige Metalle und deren Legierungen sowie Mischungen mit metallischen Komponenten oder mit nichtmetallischen Komponenten in Frage.

Der Beschichter 10 wird in einer vorbestimmten Höhe über dem Baufeld 6 verfahren, so dass die Schicht des Pulvermaterials 11 mit einer definierten Höhe über dem Träger 5 bzw. über der zuletzt verfestigten Schicht liegt. Die Vorrichtung weist des Weiteren eine Bestrahlungsvorrichtung in Gestalt eines Lasers 7 auf, der einen Laserstrahl 8, 8' erzeugt, der durch eine Ablenkeinrichtung 9 auf beliebige Punkte in dem Baufeld 6 fokussiert wird. Dadurch kann der Laserstrahl 8, 8' das Pulvermaterial 11 an den Stellen selektiv verfestigen, die dem Querschnitt des herzustellenden Objekts 3 in der Schicht entsprechen.

Die Lasersintervorrichtung kann eine Heizvorrichtung (nicht gezeigt) oberhalb des Baufelds 6 aufweisen, um eine frisch aufgetragene Pulverschicht auf eine Temperatur in der Nähe der zur Verfestigung notwendigen Prozesstemperatur des Pulvermaterials 11 vorzuheizen.

Mit dem Bezugszeichen 100 ist ein Gehäuse bezeichnet, in dem der Rahmen 1, der Träger 5 und der Beschichter 10 angeordnet sind. Vorzugsweise ist das Gehäuse gasdicht ausgebildet und hat im oberen Bereich einen Einlass zur Einleitung des Laserstrahls 8, 8'. Vorzugsweise wird ein Schutzgas in das Gehäuse 100 eingeführt. Es ist ferner eine Steuereinheit 40 vorgesehen, über die die Vorrichtung in koordinierter Weise zum Durchführen des Bauprozesses und zum Steuern des Energieeintrags durch den Laser 7 gesteuert wird. Die Steuereinheit 40 nutzt zur Herstellung des Objekts 3 Datensätze des Objekts 3, die die Geometrie des Objekts 3 definieren, wie zum Beispiel CAD-Daten.

Bei dem Betrieb der Vorrichtung wird in einem ersten Schritt der Träger 5 durch die Hubmechanik 4 soweit nach unten verfahren, bis seine obere Seite um die gewünschte Dicke einer ersten Pulverschicht unterhalb der Ebene des Baufelds 6 liegt. Dann wird durch den Beschichter 10 eine erste Schicht des Pulvermaterials 11 auf den Träger 5 aufgebracht und geglättet. Falls die Heizvorrichtung vorgesehen ist, kann durch die Heizvorrichtung die Temperatur des obersten Pulvermaterials 11 global auf wenige °C unterhalb der zur Verfestigung notwendigen Prozesstemperatur vorgeheizt werden. Anschließend steuert die Steuereinheit 40 die Ablenkeinrichtung 9 derart, dass der abgelenkte Laserstrahl 8, 8' selektiv an den Stellen der Schicht des Pulvermaterials 11 auftrifft, die verfestigt werden sollen. Dadurch wird an diesen Stellen das Pulvermaterial 11 verfestigt bzw. gesintert, so dass hier das dreidimensionale Objekt 3 entsteht.

In einem nächsten Schritt wird der Träger 5 durch die Hubmechanik 4 um die gewünschte Dicke der nächsten Schicht abgesenkt. Durch den Beschichter 10 wird eine zweite Pulvermaterialschicht aufgetragen, geglättet und mittels des Laserstahls 8, 8' selektiv verfestigt. Diese Schritte werden so oft durchgeführt, bis das gewünschte Objekt 3 hergestellt ist.

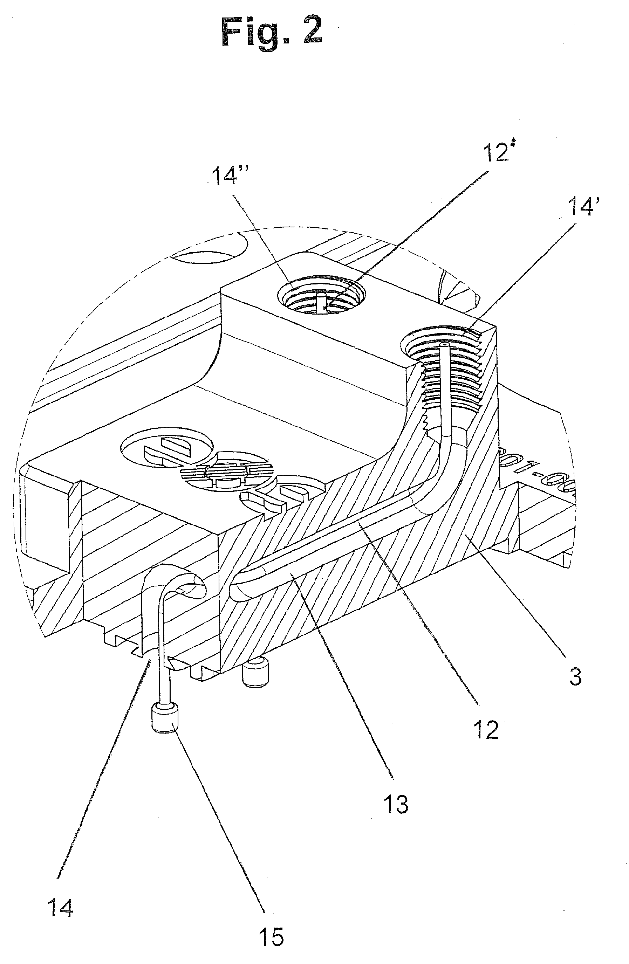

Die Fig. 2 zeigt eine Schnittansicht eines dreidimensionalen Objekts 3, das in der Vorrichtung gemäß der Fig. 1 hergestellt wird.

Das Objekt 3 hat einen Hohlraum 13, der in einer Öffnung 14 an der unteren Oberfläche des Objekts 3 mündet. Während der Herstellung des Objekts 3 wurde das Pulvermaterial 11 so verfestigt, dass zusätzlich ein Räumelement 12 gebildet wird, dass sich in dem Hohlraum 13 erstreckt und durch die Öffnung 14 aus dem Hohlraum 13 herausziehbar ist. Im dargestellten Ausführungsbeispiel in der Fig. 2 mündet der Hohlraum 13 außerdem an einer zweiten Öffnung 14' an der oben liegenden Oberfläche des Objekts 3, und das Räumelement 12 kann auch an der zweiten Öffnung 14' aus dem Hohlraum 13 heraus gezogen werden.

Das Räumelement 12 ist daher kein eigentlicher Bestandteil des endgültigen Objekts 3. Nachdem das Objekt 3 durch den Lasersinterprozess fertig gestellt wurde und das Räumelement 12 aus der Öffnung 14 des Hohlraums 13 heraus gezogen wurde, entsteht ein Pilotkanal. Der Pilotkanal erleichtert das Entfernen des restlichen Pulvermaterials 11, das nach dem Lasersinterprozess aus dem Hohlraum 13 entfernt werden muss. Nach dem Herausziehen des Räumelements 12 wird an der Öffnung 14 und an dem so entstandenen Pilotkanal eine Fluidströmung angelegt, so dass das im Hohlraum 13 befindliche Pulvermaterial 11 entfernt wird und der volle Querschnitt des Hohlraums 13 nach und nach freigelegt wird. Die Fluidströmung kann zum Beispiel Druckluft mit oder ohne Strahlgut sein, die entlang der Oberfläche des Objekts 3 geblasen werden, wodurch das Pulvermaterial 11 durch den dynamischen Druck ähnlich wie bei einer Venturi-Düse zum Beispiel aus der Öffnung 14 heraus gesaugt wird. Dabei wird Luft durch die andere Öffnung 14' in den Hohlraum 13 hinein gesaugt. Alternativ kann die Druckluft direkt in die Öffnung 14 hinein geblasen werden. Dadurch wird das restliche Pulvermaterial 11 aus der anderen Öffnung 14' heraus geblasen.

Die Fluidströmung ist aber nicht auf Druckluft beschränkt, da auch andere Gase wie zum Beispiel Schutzgas und auch Flüssigkeiten wie zum Beispiel Wasser oder Öl verwendet werden können.

Im dargestellten Ausführungsbeispiel hat das Räumelement 12 die Gestalt eines Fadens. Die Erfindung ist aber nicht auf diese Gestalt beschränkt, da das Räumelement ebenso die Gestalt eines Bands, einer Welle oder einer Spirale oder eine andere geeignete Gestalt haben kann. Die Gestalt der Welle kann zum Beispiel sinusförmig, rechteckförmig oder sägezahnförmig geschwungen sein.

Vorzugsweise ist das Räumelement 12 biegbar, indem der Querschnitt des Räumelement 12 in Anbetracht des verwendeten Pulvermaterials angemessen dimensioniert wird. Dies ist beim Herausziehen des Räumelements 12 aus verwinkelten Hohlräumen vorteilhaft. Zum Beispiel kann sich das Räumelement 12 beim Herausziehen strecken.

Es ist auch denkbar, das Räumelement 12 mit Gelenken zu versehen oder als Kette auszubilden, die aus mehreren Kettengliedern besteht.

Das Räumelement 12 kann Schubelemente oder Widerhaken (nicht gezeigt) aufweisen, die beim Herausziehen des Räumelements 12 eine größere Menge des Pulvermaterials 11 mitreißen.

Im dargestellten Ausführungsbeispiel hat das Räumelement 12 ein Greifelement 15, das das Greifen des Räumelements 12 erleichtert. Das Greifelement 15 kann aber auch weggelassen werden.

Wie dies in der Fig. 2 ersichtlich ist, berührt das Räumelement 12 die Wände des Hohlraums 13 nicht. Im dargestellten Ausführungsbeispiel hat der Hohlraum 13 eine gleichförmig verlaufende Wandung und somit die Gestalt eines Kanals 13, wobei das Räumelement 12 vorzugsweise im Wesentlichen entlang einer neutralen Faser des Kanals 13 verläuft. Dadurch wird ein idealer Verlauf des Pilotkanals gewährleistet. Der Verlauf des Räumelements 12 muss aber nicht zwingend entlang der neutralen Faser des Kanals 13 verlaufen.

In der Fig. 2 ist außerdem ein zweites Räumelement 12' dargestellt, das separat vom ersten Räumelement 12 ausgebildet ist und aus einer dritten Öffnung 14'' heraus gezogen werden kann.

Auch wenn dies nicht im Ausführungsbeispiel dargestellt ist, kann das Räumelement 12 eine Verzweigungsstelle aufweisen, an der sich das Räumelement 12 in verschiedene Verzweigungen des Hohlraums des Objekts 3 fortsetzt. Vorzugsweise wird das Räumelement 12 dann aus jener Öffnung des Objekts herausgezogen, die dem nicht-verzweigten Teil des Räumelements zugeordnet ist.

Es ist auch denkbar, dass mehrere separate Räumelemente 12 in einem Hohlraum 13 des Objekts 3 gebildet werden. Es ist auch denkbar, dass sich die separaten Räumelemente 12 dann teilweise in verschiedenen Verzweigungen eines Hohlraums 13 erstrecken.

Die vorliegende Erfindung bezieht sich auch auf ein Verfahren zum Erstellen eines Datensatzes eines dreidimensionalen Objekts 3, das mittels eines Verfahrens zum generativen Herstellen von dreidimensionalen Objekten hergestellt wird. Der Datensatz besteht zum Beispiel aus CAD-Daten des Objekts 3, mit denen die Lasersinteranlage das dreidimensionale Objekt 3 herstellt. Die Lasersinteranlage führt ein Herstellungsverfahren aus, bei dem wiederholt ein Pulvermaterials 11 auf einem Träger 5 einer Vorrichtung oder einer zuvor aufgetragenen Schicht schichtweise aufgetragen wird und das Pulvermaterial 11 durch energiehaltige Strahlung 8' an Stellen verfestigt wird, die dem Objekt 3 entsprechen. Das Objekt 3 hat zumindest einen Hohlraum 13, der in einer Öffnung 14 an der Oberfläche des Objekts 3 mündet.

Das erfindungsgemäße Verfahren zum Erstellen eines Datensatzes eines dreidimensionalen Objekts 3 weist die folgenden Schritte auf.

Zunächst wird in herkömmlicher Weise ein Datensatz erstellt, der die Geometrie bzw. die Maße des fertig gestellten dreidimensionalen Objekts 3 definiert. Dies können zum Beispiel die üblichen CAD-Daten des Objekts 3 sein.

Zusätzlich wird der Datensatz mit Daten ergänzt, die die Geometrie bzw. die Maße eines Räumelements 12 definieren, das sich in dem Hohlraum 13 erstreckt und durch die Öffnung 14 aus dem Hohlraum 13 herausziehbar ist. Dadurch wird das Räumelement 12 gleichzeitig mit dem eigentlichen Objekt 3 durch die Lasersinteranlage hergestellt.

Der Schutzumfang beschränkt sich nicht auf die dargestellten Ausführungsbeispiele, sondern er umfasst weitere Änderungen und Abwandlungen, sofern diese innerhalb des durch die beigefügten Ansprüche definierten Umfangs fallen.

Zum Beispiel ist die erfindungsgemäße Vorrichtung nicht nur beim Lasersintern anwendbar, sondern auf alle pulverbasierten, generativen Verfahren, bei denen pro aufzutragender Schicht ein Werkstoff bzw. ein Pulvermaterial verwendet wird, welches zum Beispiel durch die energiehaltige Strahlung verfestigt wird. Die energiehaltige Strahlung muss nicht unbedingt ein Laserstrahl 8' sein, sondern sie kann zum Beispiel auch ein Elektronenstrahl oder ein Partikelstrahl sein. Ebenfalls ist eine ganzflächige Bestrahlung, wie zum Beispiel einer Maske, möglich. Anstelle der energiehaltigen Strahlung kann auch ein Kleber bzw. Binder auf den gewünschten Stellen aufgebracht werden, der das Pulvermaterial selektiv verklebt.

## Patentansprüche

1. Verfahren zum generativen Herstellen eines dreidimensionalen Objekts (3) mittels einer Vorrichtung, mit den folgenden Schritten:
a) Schichtweises Auftragen eines Pulvermaterials (11) auf einem Träger (5) der Vorrichtung oder einer zuvor aufgetragenen Schicht ;
b) selektives Verfestigen des Pulvermaterials (11) an jenen Stellen, die dem Querschnitt des Objekts (3) in einer Schicht entsprechen,
c) Wiederholen der Schritte a) und b), bis das Objekt (3) fertig gestellt ist;
wobei das Objekt (3) zumindest einen Hohlraum (13) aufweist, der in einer Öffnung (14) an der Oberfläche des Objekts (3) mündet; und
das Pulvermaterial (11) so verfestigt wird, dass ein Räumelement (12) gebildet wird, das sich in dem Hohlraum (13) erstreckt und durch die Öffnung (14) aus dem Hohlraum herausziehbar ist.

2. Verfahren gemäß Anspruch 1, des Weiteren mit Schritten zum:
Herausziehen des Räumelements (12) aus der Öffnung (14) des Hohlraums (13), um einen Pilotkanal zu bilden, nachdem das Objekt (3) fertig gestellt wurde;
Anlegen einer Fluidströmung an der Öffnung (14) und an dem Pilotkanal, so dass im Hohlraum (13) befindliches Pulvermaterial (11) entfernt wird.

3. Verfahren gemäß einem der vorherigen Ansprüche,
wobei das Räumelement (12) die Gestalt eines Fadens, eines Bands, einer Welle, einer Spirale oder einer Kombination davon hat.

4. Verfahren gemäß einem der vorherigen Ansprüche,
wobei das Räumelement (12) Schubelemente oder Widerhaken aufweist.

5. Verfahren gemäß einem der vorherigen Ansprüche,
wobei das Räumelement (12) Greifelemente (15) aufweist.

6. Verfahren gemäß einem der vorherigen Ansprüche,
wobei das Räumelement (12) die Wände des Hohlraums (13) nicht berührt, und bei einem Hohlraum (13), der die Gestalt eines Kanals (13) mit gleichförmig verlaufender Wandung hat, vorzugsweise im Wesentlichen entlang einer neutralen Faser des Kanals (13) verläuft.

7. Verfahren gemäß einem der vorherigen Ansprüche,
wobei der Hohlraum (13) an zumindest zwei Öffnungen (14, 14') an der Oberfläche des Objekts (3) mündet, und das Räumelement (12) an beiden Öffnungen (14, 14') aus dem Hohlraum (13) herausziehbar ist.

8. Verfahren gemäß einem der vorherigen Ansprüche,
wobei das Räumelement (12) eine Verzweigungsstelle aufweist, an der sich das Räumelement (12) in verschiedenen Verzweigungen des Hohlraums (13) des Objekts (3) fortsetzt.

9. Verfahren gemäß einem der vorherigen Ansprüche,
wobei mehrere Räumelemente (12, 12') in einem oder mehreren Hohlräumen (13) des Objekts (3) gebildet werden.

10. Verfahren zum Erstellen eines Datensatzes eines dreidimensionalen Objekts (3), das mittels eines Verfahrens zum generativen Herstellen von dreidimensionalen Objekten hergestellt wird, wobei das Verfahren wiederholt ein Pulvermaterial (11) auf einem Träger (5) einer Vorrichtung oder einer zuvor aufgetragenen Schicht schichtweise aufträgt, und das Pulvermaterial (11) an Stellen verfestigt, die dem Objekt (3) entsprechen;
wobei das Objekt (3) zumindest einen Hohlraum (13) aufweist, der in einer Öffnung (14) an der Oberfläche des Objekts (3) mündet,
wobei das Verfahren zum Erstellen des Datensatzes folgende Schritte aufweist:
Erstellen eines Datensatzes, der die Geometrie des fertig gestellten dreidimensionalen Objekts (3) definiert; und
Ergänzen des Datensatzes mit Daten, die die Geometrie eines Räumelements (12) definieren, das sich in dem Hohlraum (13) erstreckt und durch die Öffnung (14) aus dem Hohlraum (13) herausziehbar ist.
